# EUROPÄISCHE PATENTANMELDUNG

(11) **EP 2 634 700 A1**
(43) Veröffentlichungstag der Anmeldung: **04.09.2013**
(21) Anmeldenummer: 12157305.9
(22) Anmeldetag: 28.02.2012
(51) Int. Cl.: G06F 11/34, G06F 11/36

(54) **Verfahren und Entwicklungsumgebung zur Überwachung eines ablaufenden Programms**

(71) Anmelder: Siemens Aktiengesellschaft, 80333 München (DE)
(72) Erfinder: Opaterny, Thilo, 90453 Nürnberg (DE)

(57) **Zusammenfassung**

Die Erfindung betrifft ein Verfahren und ein Debugging-System zur Überwachung eines ablaufenden Programms (P) einer Zielplattform (ZP) durch ein Diagnoseprogramm (DS) einer Diagnoseplattform (ES), wobei ein Überwachungsauftrag mit einer definierten Auslösebedingung von dem Diagnoseprogramm (DS) zu der Zielplattform (ZP) übermittelt wird, wobei das Programm (P) mit zumindest einem Überprüfungspunkt versehen wird, undwobei in den Fällen, in denen der Ablauf des zu überwachenden Programms (P) den zumindest einen Überprüfungspunkt erreicht, die Ausführung dieses Programms (P) unterbrochen und mittels einer Routine (AR) die Erfüllung einer Auslösebedingung überprüft wird. Dabei wird auf der Zielplattform ein für das Diagnoseprogramm zugreifbarer Datenspeicher vorgesehen, wobei bei einem ersten Erreichen des zumindest einen Überprüfungspunktes zumindest ein Wert einer Variablen oder eine Zustandsinformation des Programms (P) in dem Datenspeicher gesichert und bei einem nachfolgenden Erreichen dieses oder eines anderen Überprüfungspunktes zur Feststellung der Erfüllung der Auslösebedingung mit einem aktuellen Wert der Variablen oder einer aktuellen Zustandsinformation in Bezug gesetzt. Durch dieses Verfahren ist es möglich, das Vorliegen bzw. die Erfüllung der Auslösebedingung auch bei speicherprogrammierbaren Steuerungen, Embedded-Systems und dgl. seitens der Zielplattform zu überprüfen, wobei durch das Vorsehen eines Datenspeichers, dessen Inhalt zwischen zwei "Calls" der Routine nicht verloren geht, also durch einen sog. "persistenten" Speicher, es möglich ist, bei der Auslösebedingung einen zeitlichen Verlauf eines Zustands oder einer Variablen auszuwerten.

## Beschreibung

Die Erfindung betrifft ein Verfahren zur Überwachung eines ablaufenden Programms einer Zielplattform gemäß dem Oberbegriff des Patentanspruchs 1, und ein Debugging-System für die Erstellung und die Überwachung eines Programms für eine Zielplattform gemäß dem Oberbegriff des Patentanspruchs 11.

Programme für Computer und andere datentechnische Geräte und Anlagen werden in der Regel in einer Programmiersprache (Hochsprache) erstellt und danach mittels eines Compilers oder eines Interpreters in ein ablauffähiges Programm (Maschinencode, Object-Code o.ä.) übersetzt. Während die in der Hochsprache verfassten Computerprogramme durch ein verwendetes Entwicklungssystem bereits während oder nach dem Schreiben recht gut hinsichtlich syntaktischer Fehler untersucht werden können, treten strukturelle oder logische Unzulänglichkeiten und Fehler oft erst während eines Programmablaufs zu Tage.

Zur Fehlersuche stehen in den gebräuchlichen Entwicklungsumgebungen verschiedene Mittel zur Verfügung. Diese sind häufig unter dem Sammelbegriff "Debugger" bekannt. Im Folgenden werden solche "Debugger" betrachtet, die zur Laufzeit eines zu untersuchenden Programms Analysen erstellen und Ereignisse transparent machen. Bekannte Hilfsmittel sind dabei Beobachtungstabellen ("Watch Table"), Haltepunkte ("Break Points") und Einzelschrittausführung ("Single Step"), Programmaufzeichnungen ("Tracing") sowie Aufzeichnungsstatistiken ("Profiling").

Alle diese Werkzeuge verwenden Auslöser ("Trigger"), die eine Auslösebedingung ("Trigger Condition") definieren, die bestimmt, wann bzw. in welchem Fall eine Aktion durchzuführen ist, und wann nicht. Der Auslöser eines Haltepunktes ist das Erreichen einer bestimmten Instruktion, also beispielsweise eines Programmbefehls oder "Statements". In den Fällen, in denen eine Funktion, ein Baustein oder eine ähnliche Programmstruktur in einem Programm mehrfach verwendet bzw. durchlaufen wird, ist es häufig unpraktikabel, wenn bei jedem Durchlauf der entsprechenden Anweisung, also bei jedem Erreichen dieses Haltepunktes, eine Aktion oder eine Aktions-Kette zur Fehleranalyse o.ä. durchlaufen wird. Ein Anwender hat daher gemeinhin die Möglichkeit, Auslösebedingungen zu definieren, die erfüllt sein müssen, um den Programmablauf zu unterbrechen und eine Analyse o.ä. auszulösen. Bei den gebräuchlichen "Debuggern" wird daher an einer interessierenden Stelle des zu überprüfenden Programms ein Überprüfungspunkt, z.B. Haltepunkt ("Break Point"), eingesetzt, der dafür sorgt, dass bei Erreichen dieser Stelle im Programmablauf ein sog. "Interrupt" ausgelöst wird. Dieser "Interrupt" sorgt dafür, dass das Programm kurzzeitig angehalten wird und eine Meldung an den "Debugger" versendet wird. Der "Debugger" überprüft danach, ob eine Auslösebedingung erfüllt ist, wobei der Debugger alle diejenigen Variablen, Inhalte, Informationen (beispielsweise Aufrufpfade von Funktionen) etc. und andere Daten abruft, die für die Entscheidungsfindung hinsichtlich der Auslösebedingung benötigt werden. In den Fällen, in denen die Auslösebedingung nicht erfüllt ist, gibt der Debugger die weitere Ausführung des zu untersuchenden Programms frei. Falls jedoch die Auslösebedingung erfüllt ist, bleibt der Programmablauf so lange unterbrochen, bis vorgesehene Maßnahmen zur Analyse etc. beendet sind.

Bei gebräuchlichen Programmen für Personal-Computer und ähnliche Geräte laufen sowohl das zu untersuchende Programm als auch die benutzte Entwicklungsumgebung regelmäßig auf derselben Hardware-Plattform, dem sog. "Zielsystem". Dies bedeutet, dass zum Programmtest (Debugging) des Programms das Diagnoseprogramm (Debugger) innerhalb der Entwicklungsumgebung oder zumindest auf demselben "Rechner" zur Ausführung gebracht wird. Die Kommunikation zwischen der Entwicklungsumgebung mit dem "Debugger" und dem zu untersuchenden Programm bzw. den von dem zu untersuchenden Programm verwendeten Registern, Variablen etc. erfolgt also innerhalb einer geschlossenen Hardware-Struktur und ist dabei vergleichsweise schnell, weil beispielsweise ein "Debugger" direkten Zugriff auf Register, Programmspeicher, Variablenspeicher etc. nehmen kann.

Bei der Entwicklung von Programmen für speicherprogrammierbare Steuerungen, Mikrocontroller, Signalprozessoren, mikroprozessorgesteuerte Geräte (sog. "Embedded-Systemen") etc. besteht die Möglichkeit des direkten Zugriffs in der Regel nicht, weil bei solchen Architekturen die Entwicklungsumgebung und damit das Diagnoseprogramm ("Debugger") und das zu untersuchende Programm auf unterschiedlichen Systemen zum Ablauf gebracht werden. Dabei stellt z.B. eine speicherprogrammierbare Steuerung dem Programm eine Ablaufumgebung zur Verfügung, wobei innerhalb dieser Ablaufumgebung auch die Vorkehrungen realisiert werden müssen, die zur Realisierung der oben erwähnten "Werkzeuge" auf dem Zielsystem notwendig sind. Bei Erreichen eines Haltepunkts oder eines ähnlichen Ereignisses wird auch bei den genannten speicherprogrammierbaren Steuerungen und ähnlichen Systemen der Programmablauf gestoppt, danach wird jedoch über eine Netzwerkverbindung oder eine ähnliche vergleichsweise langsame Verbindung ein Dialog mit dem externen Debugger durchgeführt. Dies führt dazu, dass auch in den Fällen, in denen ein Haltepunkt o.ä. erreicht wird und dabei keine Auslösebedingung erfüllt ist, der Programmablauf stark verlangsamt wird, weil über die Erfüllung einer Auslösebedingung seitens des Debuggers entschieden wird, was erfordert, dass die erforderlichen Informationen (beispielsweise zu überprüfende Variableninhalte, Zustandsinformationen etc.) auch bei jedem Erreichen eines Haltepunkts oder eines anderen Überprüfungspunktes zu der Hardware-Plattform des Debuggers übertragen werden müssen.

Eine Möglichkeit zur Lösung des Problems ist auch bei den Speicherprogrammierbaren Steuerungen die Installation des kompletten Debuggers auf der "Zielplattform", wie es bei PCbasierten Programmen üblich ist. Dem steht jedoch entgegen, dass die genannten speicherprogrammierbaren Steuerungen, Embedded-Systeme o.ä. hinsichtlich ihrer Architektur, ihres Speicherplatzes, ihrer Rechenkapazität usw. oft nicht für die zusätzliche Installation eines Debuggers ausgelegt sind. Darüber hinaus ist es bei solchen Systemen oft wichtig, die Überprüfung eines Programms unter möglichst realitätsnahen Bedingungen durchzuführen, was bei der zusätzlichen Installation eines kompletten Debuggers nicht gelingen kann.

Aus der Europäischen Offenlegungsschrift EP 2 386 952 A1 - Opaterny "Verfahren und Entwicklungsumgebung zur Überwachung eines ablaufenden Programms" ist es dazu bekannt, dass Auslösebedingungen wie Funktionsaufrufe ("calls") auf der ZielPlattform evaluiert werden, wobei nur in den Fällen, in denen eine Auslösebedingung erfüllt ist, eine Analyse o.ä. durch einen "externen" Debugger durchgeführt wird. Dadurch ist es möglich, dass neue oder geänderte Auslösebedingungen in der Entwicklungsumgebung definiert und realisiert werden, ohne das Laufzeitsystem (Programm, Betriebssystem und Firmware des Zielsystems) erweitern zu müssen. Dabei ist eine Auslösebedingung bzw. eine Routine zur Überprüfung der Auslösebedingung eine Funktion, die eine Bool'sche Rückgabe (wahr, falsch - "true", "false") hat. Da viele speicherprogrammierbare Steuerungen es ermöglichen, Software-Bausteine und damit Funktionen zur Laufzeit auszutauschen, können somit auch Routinen zur Überprüfung von Auslösebedingungen jederzeit und auch nachträglich, also auch nach Installation des zu überprüfenden Programms, geändert und ausgetauscht werden.

Nachteilig ist dabei, dass zur Prüfung, ob ein Triggerereignis eingetreten ist, nur einfache Zustände von Variablen oder "Eingängen" betrachtet werden, also beispielsweise Schwellwertüberschreitungen, Zustände Boole'scher Variablen oder dgl. Für komplexere Auswertungen müssen die zur Entscheidung über ein Triggerereignis benötigten Variableninhalte, Zustandsinformationen oder dgl. zu dem externen "Debugger" übermittelt und dort ausgewertet werden. Der dadurch entstehende zeitliche Verzug bzw. die Unterbrechung führt jedoch oft dazu, dass eine vom untersuchten Programm gesteuerte Maschine oder Prozeß überhaupt nicht mehr oder zumindest nicht mehr schnell genug gesteuert werden kann, so dass dieses Verfahren zur Fehlersuche im operativen Betrieb unter Echtzeitbedingungen nicht eingesetzt werden kann.

Es ist also eine Aufgabe der vorliegenden Erfindung, bei der Fehlersuche an Programmen für speicherprogrammierbare Steuerungen und ähnliche "Systeme" komplexe Auslösebedingungen für Überprüfungspunkte zu ermöglichen.

Der Lösung der Aufgabe liegt die Erkenntnis zugrunde, dass komplexe Auslösebedingungen oft einen Zugriff auf Zustände in vorangegangenen Zyklen erfordern und nicht lokal auf der Zielplattform ausgewertet werden können, weil die zur Auswertung des Triggerereignisses aufgerufene Routine keinen persistenten Speicher aufweist, daher bei jedem Aufruf ("call") neu initialisiert wird und somit keine Kenntnis über Variableninhalte und Zustände des "Targets" bei vergangenen Zyklen hat. Erfindungsgemäß kann durch Vorsehen eines persistenten Speichers und durch ein Inbezugsetzen von aktuellen mit bei vorhergehenden Aufrufen der Routine gespeicherten Werten beispielsweise auch ein von Oszilloskopen bekannten flankengesteuerter Trigger realisiert werden, und das, ohne die Inhalte der betrachteten Variablen permanent, also bei jedem Zyklus, an ein Debugging-System, einen Personal-Computer oder ein Diagnosegerät übermitteln und dort puffern zu müssen, und ohne die Historie einer Variablen oder eines Zustands im "Target" bereits bei der Programmerstellung selbst vorhalten zu müssen.

Die Aufgabe wird insbesondere mit einem Verfahren gemäß dem Patentanspruch 1 gelöst. Dabei ist vorgesehen, dass zur Überwachung eines ablaufenden Programms einer Zielplattform durch ein Diagnoseprogramm einer Diagnoseplattform ein Überwachungsauftrag mit einer definierten Auslösebedingung von dem Diagnoseprogramm zu der Zielplattform übermittelt wird, wobei das Programm mit zumindest einem Überprüfungspunkt versehen wird, wobei in den Fällen, in denen der Ablauf des zu überwachenden Programms den zumindest einen Überprüfungspunkt erreicht, die Ausführung dieses Programms unterbrochen, durch eine Verarbeitungseinheit der Zielplattform eine Routine ausgeführt und mittels dieser Routine die Erfüllung einer Auslösebedingung überprüft wird, und wobei zumindest in den Fällen, in denen die Auslösebedingung erfüllt ist, zumindest eine Meldung zu dem Diagnoseprogramm übertragen wird. Erfindungsgemäß wird auf der Zielplattform ein für das Diagnoseprogramm zugreifbarer Datenspeicher vorgesehen, wobei bei einem ersten Erreichen des zumindest einen Überprüfungspunktes zumindest ein Wert einer Variablen oder eine Zustandsinformation des Programms in dem Datenspeicher gesichert wird, und wobei bei einem nachfolgenden Erreichen dieses oder eines anderen Überprüfungspunktes zur Feststellung der Erfüllung der Auslösebedingung der Inhalt des Datenspeichers mit einem aktuellen Wert der Variablen oder einer aktuellen Zustandsinformation in Bezug gesetzt wird. Durch dieses Verfahren ist es möglich, das Vorliegen bzw. die Erfüllung der Auslösebedingung auch bei speicherprogrammierbaren Steuerungen, Embedded-Systems und dgl. seitens der Zielplattform zu überprüfen, wobei durch das Vorsehen eines Datenspeichers, dessen Inhalt zwischen zwei "Calls" der Routine nicht verloren geht, also durch einen sog. "persistenten" Speicher, es möglich ist, bei der Auslösebedingung einen zeitlichen Verlauf eines Zustands oder einer Variablen auszuwerten.

Die Aufgabe wird außerdem durch ein Debugging-System gemäß dem Patentanspruch 11 gelöst. Dabei ist ein Debugging-System zur Überwachung eines ablaufenden Programms einer Zielplattform durch ein Diagnoseprogramm einer Diagnoseplattform vorgesehen, mit einem Diagnoseprogramm zur Übermittlung eines Überwachungsauftrages mit einer definierten Auslösebedingung zu der Zielplattform, wobei das Programm (P) mit zumindest einem Überprüfungspunkt versehbar ist, wobei vorgesehen ist, in den Fällen, in denen der Ablauf des zu überwachenden Programms den zumindest einen Überprüfungspunkt erreicht, die Ausführung dieses Programms zu unterbrechen, durch eine Verarbeitungseinheit der Zielplattform eine Routine auszuführen und mittels dieser Routine die Erfüllung einer Auslösebedingung zu überprüfen, und wobei zumindest in den Fällen, in denen die Auslösebedingung erfüllt ist, zumindest die Übertragung einer Meldung zu dem Diagnoseprogramm vorgesehen ist. Erfindungsgemäß ist auf der Zielplattform ein für das Diagnoseprogramm zugreifbarer Datenspeicher vorgesehen, wobei weiter vorgesehen ist, bei einem ersten Erreichen des zumindest einen Überprüfungspunktes zumindest ein Wert einer Variablen oder eine Zustandsinformation des Programms in dem Datenspeicher zu sichern, und wobei schließlich vorgesehen ist, bei einem nachfolgenden Erreichen dieses oder eines anderen Überprüfungspunktes zur Feststellung der Erfüllung der Auslösebedingung der Inhalt des Datenspeichers mit einem aktuellen Wert der Variablen oder einer aktuellen Zustandsinformation in Bezug zu setzen. Mit einem solchen Debugging-System lassen sich die Vorteile des erfindungsgemäßen Verfahrens realisieren.

Vorteilhafte Ausgestaltungen des erfindungsgemäßen Verfahrens sind in den abhängigen Patentansprüchen angegeben. Die dabei beschriebenen Merkmale und Vorteile gelten sinngemäß auch für das erfindungsgemäße Debugging-System. Umgekehrt gelten die Merkmale und Vorteile des erfindungsgemäßen Debugging-Systems auch für das Verfahren. Die in den abhängigen Ansprüchen beschrieben Merkmale können sowohl einzeln als auch in verschiedenen Kombinationen realisiert werden.

Ein vorteilhafter Anwendungsfall ist gegeben, wenn die Zielplattform eine speicherprogrammierbare Steuerung einer industriellen Automatisierungsanordnung ist, wobei zumindest ein Teil des Programms zyklisch ausgeführt wird. Gerade bei den speicherprogrammierbaren Steuerungen kommt es darauf an, während des Systemstests bzw. der Überprüfung eines Programms möglichst wenige Änderungen an einer Zielplattform vorzunehmen, durch die die Konfiguration vom späteren Produktivbetrieb abweicht. Vorteilhaft wird dabei ein Haltepunkt o.ä., ein gebräuchliches Beispiel für einen sog. "Überprüfungspunkt", der den Aufruf der Routine auslöst, innerhalb eines zyklisch durchlaufenen Programmteils gesetzt. Dann kann in dem Datenspeicher eine Mehrzahl von Werten zumindest einer Variablen oder Zustandsinformation aus einer Mehrzahl von Zyklen des Programms (P) gespeichert und zur Feststellung der Erfüllung der Auslösebedingung verwendet werden, so dass auf eine Änderung eines gesteuerten Prozesses getriggert werden kann.

Zur Inbezugsetzung kann anhand der Werte aus verschiedenen Zyklen eine Trendanalyse, eine schnelle Fouriertransformation oder eine beliebige andere, insbesondere auch eine vom Nutzer definierte, Auswertung durchgeführt werden. Vorteilhaft können auch Änderungsgeschwindigkeiten und "Beschleunigungen" von Werten betrachtet, also die erste bzw. zweite Ableitung einer Größe. Auch statistische Auswertungen können vorteilhaft programmiert werden. Solche Verfahren lassen sich insbesondere auf den in Speicherprogrammierbaren Steuerungen verwendeten Architekturen so implementieren, dass die Latenzzeit zur Ausführung der Routine den operativen Prozess, also das Programm, meist nicht unakzeptabel verzögert.

Vorteilhaft wird als das Diagnoseprogramm (DS) ein Entwicklungssystem (ES) für speicherprogrammierbare Steuerungen verwendet. Dadurch kann bei festgestellten Fehlern unverzüglich das überwachte Programm angepasst werden.

In einem komfortablen Anwendungsszenario werden Parameter und/oder Eigenschaften der Auslösebedingung mit einem graphischen Editor definiert und durch einen Programmgenerator in die ablauffähige Routine (AR) umgesetzt. Zur schnelleren Umsetzung einer Diagnose ist die Routine getrennt von dem Programm und nach dem Laden oder Installieren des Programms auf die Zielplattform übertragbar.

Die Routine kann vorteilhaft Aufrufe von Funktionen und Methoden einer Firmware und/oder eines Betriebssystems der Zielplattform umfassen, wodurch der Code der Routine selbst kurz und übersichtlich gestaltet werden kann.

Das Vorsehen einer dedizierten Diagnoseplattform erübrigt sich, wenn das Diagnoseprogramm (DS) als Anwendung in einem Browser der Diagnoseplattform (ES) abläuft, wobei die Zielplattform (ZP) einen Web-Server zur Kommunikation zwischen der Routine (AR) und dem Diagnoseprogramm (DS) aufweist.

Eine gebräuchliche Anwendung wird möglich, wenn als der Überprüfungspunkt ein Haltepunkt ("Watchpoint") verwendet wird, wobei an dem Haltepunkt der Ablauf des Programms unterbrochen und mittelbar oder unmittelbar die Routine aufgerufen wird, bzw. eine Verarbeitungseinheit der Zielplattform in die Routine "einspringt". Die sog. "Tracing"-Punkte (Samplepoints, Start-Trigger, Stop-Trigger, "Baustein-Ende"-Trigger) oder Beobachtungstabellen können mittels des erfindungsgemäßen Verfahrens mit individuellen Triggerbedingungen verknüpft werden. Dabei kann in vorteilhaften Ausgestaltungen die Routine auch Aufrufe von Funktionen und Methoden einer Firmware und/oder eines Betriebssystems der Zielplattform vornehmen, wobei in einer weiteren vorteilhaften Ausgestaltung die Firmware oder das Betriebssystem Methoden für den lesenden Zugriff auf einen Programmstapel ("Stack") der Zielplattform aufweist. In diesem Fall ist es möglich, die Auslösebedingungen von Zuständen des Programmstapels, beispielsweise Aufrufpfaden etc., abhängig zu machen bzw. solche darin zu integrieren.

Ein Ausführungsbeispiel des erfindungsgemäßen Verfahrens wird nachfolgend anhand der Zeichnungen erläutert. Es dient gleichzeitig der Erläuterung einer erfindungsgemäßen Entwicklungsumgebung bzw. Entwicklungs-Systems.

Dabei zeigen:
- Figur 1: in einer schematischen Darstellung eine Anordnung aus der Zielplattform und der Diagnoseplattform, und
- Figur 2: einen Pseudocode eines Programmierbeispiels für eine Routine zur Überprüfung der Auslösebedingung.

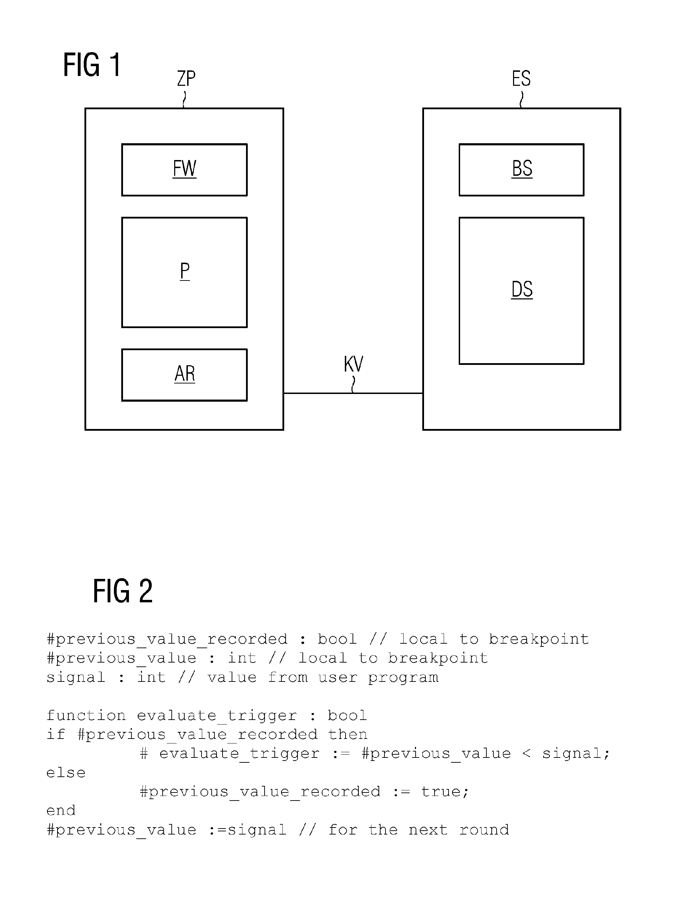

In der Figur 1 ist als Zielplattform ZP eine speicherprogrammierbare Steuerung schematisch dargestellt, welche über Kommunikationsmittel, hier: eine Kommunikationsverbindung KV, mit einem Entwicklungssystem ES verbunden ist, welches in diesem Ausführungsbeispiel die Diagnoseplattform darstellt. Das Entwicklungssystem ES ist dabei beispielsweise ein Personal-Computer, der mit einem Betriebssystem BS ausgestattet ist und der neben anderen Funktionen, beispielsweise Compiler, Editor, Linker etc., auch mit einem Diagnoseprogramm DS ("Diagnose-Software") als "Debugger" ausgestaltet ist. Auf der Zielplattform ZP, also der speicherprogrammierbaren Steuerung, ist eine Firmware FW installiert, die die Funktionalität eines Betriebssystems ausübt, aber im wesentlichen unveränderlich in einem Speicher (FLASH) abgelegt ist.

Auf der Zielplattform ZP läuft ein Programm P (Anwenderprogramm) ab, welches eine automatisierungstechnische Aufgabe löst. Dazu ist das Programm P in einem Arbeitsspeicher (RAM = Random Access Memory) abgelegt, in dem auch die Variablen des Programms P abgelegt sind.

Die Entwicklungsumgebung, also im Wesentlichen die Software des Entwicklungssystems ES, umfasst eine (nicht dargestellte) zusätzliche Editier-Funktion, mit der durch das einfache Betätigen von Schaltflächen, Listboxen und dgl., kurz: GUI-Elemente (GUI = Graphical User Interface), eine Auslösebedingung für einen Überprüfungspunkt (hier: Haltepunkt) definiert werden kann. Mittels des bekannten Verfahrens des "Code-Patchings" wird an die entsprechende Stelle des Programmcodes des Programms P ein entsprechender Haltepunkt eingefügt ("injiziert"), wodurch später eine Programmausführung anhält und ein sog. Software-Interrupt ausgelöst wird. Die Editiereinrichtung übersetzt weiter die mittels der graphischen Benutzeroberfläche definierten Kriterien in eine Routine AR (Auslöse- oder Auswerte-Routine), die dann in einem MaschinenCode vorliegt und derart codiert ist, dass sie auf der Zielplattform ZP ablauffähig ist. Diese Routine AR wird mittels der Kommunikationsverbindung KV als ausführbarer Programm-block zu der Zielplattform ZP übertragen und dort im Arbeitsspeicher neben dem dort residierenden Programm P und dem dort für Variablen, Konstanten etc. allokierten Arbeitsspeicherbereich abgelegt. Die Routine AR ist dabei über den Software-Interrupt mit dem "gesetzten" Haltepunkt verknüpft, d.h., dass jedes Mal, wenn die Ausführung des Programms P den Überprüfungspunkt bzw. Haltepunkt erreicht, mittels des Software-Interrupts eine Funktion in der Firmware FW ausgeführt wird, die der Behandlung des Software-Interrupts dient. Dabei wird aus dieser Funktion der Firmware FW heraus zur Überprüfung des Vorliegens der Auslösebedingung wiederum die Routine AR aufgerufen, die als Rückgabewert einen Boole'schen Wert zurückgibt, nämlich die Information darüber, ob die Auslösebedingung erfüllt ist (wahr) oder nicht (falsch). Attraktiv kann der Software-Interrupt auch ohne "Umwege" über eine Firmware-Routine AR verzweigen.

Die Figur 2 zeigt einen an die Programmiersprache PASCAL angelehnten Pseudocode, der als ein Bestandteil zu einer Routine AR compiliert werden kann. Ein Haltepunkt soll dabei mit der Auslösebedingung "nur wenn der Wert der Variable "signal" beim vorangegangenen Aufruf der Routine AR kleiner war als der aktuelle Wert der Variablen "signal" " verknüpft werden. Dies wird vom Übersetzer der Entwicklungsumgebung in einen Programm-Block umgesetzt, wobei in der Figur 2 ein an die Programmiersprache Pascal angelehnter Pseudo-Code dargestellt ist und wobei der Programm-Block in einen (nicht dargestellten) Maschinencode übersetzt (compiliert) und als ein Bestandteil der Routine AR zu der Zielplattform ZP übertragen wird. Dieses Codestück wird mit dem Haltepunkt-Auftrag verknüpft, indem entweder die besagte Firmware-Routine darauf verweist oder aber der Software-Interrupt des Haltepunktes direkt darauf verweist, beispielsweise durch eine geeignete Interrupt-Maskierung. Erfindungsgemäß sind die Variablen "#previous_value" und "#previous_value_recorded" persistent, d.h., dass die Inhalte dieser Variablen zwischen zwei Aufrufen ("calls") der Routine AR nicht verloren gehen. Im Stand der Technik sind dazu Verfahren bekannt; im einfachsten Fall werden zur Speicherung der persistenten Daten festgelegte Speicherzellen oder dgl. verwendet.

In einer bevorzugten Ausführungsform kann für die Routine AR ein fester Speicherbereich oder ein fester Name definiert sein, so dass bei einem Austausch der Routine AR eine Anpassung des Aufrufs ("Calls") in der Firmware FW nicht durchgeführt werden muss.

Durch die (aus dem Stand der Technik bekannte) Verknüpfung des Haltepunktes mit einem Software-Interrupt, der in einer der beschriebenen Varianten eine (im wesentlichen unveränderliche) Firmware-Routine aufruft, mit der frei austauschbaren Routine AR kann das Vorliegen der Auslösebedingung, die letztlich gemäß dem Beispiel aus der Figur 2 in dem Programmcode der Routine AR definiert ist, vollständig und ohne zwischenzeitliche Kommunikation seitens der Zielplattform ZP ausgewertet werden.

Durch das Vorsehen eines Datenspeichers, dessen Inhalt zwischen zwei "Calls" der Routine AR nicht verloren geht, also einen sog. "persistenten" Speicher, ist es möglich, bei der Auslösebedingung einen zeitlichen Verlauf eines Zustands oder einer Variablen auszuwerten. Dadurch kann ähnlich wie bei einem Oszilloskop auf Flanken "getriggert" werden. Alternativ lassen sich auch komplexere Analysen vornehmen, beispielsweise Hochpass- oder Tiefpass-Filterung, eine schnelle FourierTransformation etc. Natürlich können auch mehrere Variablen oder Zustände mit einer nahezu beliebigen Speichertiefe erfasst werden. Vorteilhaft bietet sich dabei die Verwendung von Ringspeicherstrukturen an, wenn jeweils auf Daten einer definierten Anzahl vergangener Zyklen zugegriffen werden soll.

Nur dann, wenn die Auslösebedingung vorliegt bzw. erfüllt ist (Rückgabewert: "True"), wird zumindest eine Meldung über die Kommunikationsverbindung KV oder andere Kommunikationsmittel an das Entwicklungssystem ES geschickt, wo das Diagnoseprogramm DS (Debugger) in einer grundsätzlich aus dem Stand der Technik bekannten Art und Weise die weitere Verarbeitung des Haltepunktes vornimmt, also beispielsweise Variablen-Inhalte von der Zielplattform ZP abruft und dgl. Bei negativem Rückgabewert ("False") hingegen kann die Ausführung des Programms P unverzüglich fortgesetzt werden, wodurch sich die Programm-Abarbeitung nur insoweit verzögert, als ggf. die Software-Interrupt-Service-Routine der Firmware FW und die Routine AR selbst abgearbeitet wird. Da diese Code-Bestandteile jedoch vorzugsweise in Maschinencode vorliegen, fällt für die meisten Anwendungen die daraus resultierende Verzögerung kaum ins Gewicht, wohingegen eine zwischenzeitliche Kommunikation über die Kommunikationsverbindung KV und eine entsprechende Ausnahme-Behandlung seitens des Entwicklungssystems ES sehr wohl in vielen Fällen zu einer nicht tolerablen Verzögerung führen würde.

## Patentansprüche

1. Verfahren zur Überwachung eines ablaufenden Programms (P) einer Zielplattform (ZP) durch ein Diagnoseprogramm (DS) einer Diagnoseplattform (ES), wobei ein Überwachungsauftrag mit einer definierten Auslösebedingung von dem Diagnoseprogramm (DS) zu der Zielplattform (ZP) übermittelt wird, wobei das Programm (P) mit zumindest einem Überprüfungspunkt versehen wird,
wobei in den Fällen, in denen der Ablauf des zu überwachenden Programms (P) den zumindest einen Überprüfungspunkt erreicht, die Ausführung dieses Programms (P) unterbrochen, durch eine Verarbeitungseinheit der Zielplattform (ZP) eine Routine (AR) ausgeführt und mittels dieser Routine (AR) die Erfüllung einer Auslösebedingung überprüft wird, und
wobei zumindest in den Fällen, in denen die Auslösebedingung erfüllt ist, zumindest eine Meldung zu dem Diagnoseprogramm (DS) übertragen wird,
**dadurch gekennzeichnet,**
**dass** auf der Zielplattform ein für das Diagnoseprogramm zugreifbarer Datenspeicher vorgesehen wird,
**dass** bei einem ersten Erreichen des zumindest einen Überprüfungspunktes zumindest ein Wert einer Variablen oder eine Zustandsinformation des Programms (P) in dem Datenspeicher gesichert wird, und
**dass** bei einem nachfolgenden Erreichen dieses oder eines anderen Überprüfungspunktes zur Feststellung der Erfüllung der Auslösebedingung der Inhalt des Datenspeichers mit einem aktuellen Wert der Variablen oder einer aktuellen Zustandsinformation in Bezug gesetzt wird.

2. Verfahren nach Patentanspruch 1,
**dadurch gekennzeichnet,**
**dass** die Zielplattform (ZP) eine speicherprogrammierbare Steuerung einer industriellen Automatisierungsanordnung ist, wobei zumindest ein Teil des Programms zyklisch ausgeführt wird.

3. Verfahren nach Patentanspruch 2,
**dadurch gekennzeichnet,**
**dass** in dem Datenspeicher eine Mehrzahl von Werten zumindest einer Variablen oder Zustandsinformation aus einer Mehrzahl von Zyklen des Programms (P) gespeichert und zur Feststellung der Erfüllung der Auslösebedingung verwendet wird.

4. Verfahren nach Patentanspruch 2 oder 3,
**dadurch gekennzeichnet,**
**dass** zur Inbezugsetzung anhand der Werte aus verschiedenen Zyklen eine Trendanalyse oder eine schnelle Fouriertransformation durchgeführt wird.

5. Verfahren nach einem der vorhergehenden Patentansprüche, **dadurch gekennzeichnet,**
**dass** als das Diagnoseprogramm (DS) ein Entwicklungssystem (ES) für speicherprogrammierbare Steuerungen verwendet wird.

6. Verfahren nach einem der vorhergehenden Patentansprüche, **dadurch gekennzeichnet,**
**dass** Parameter und/oder Eigenschaften der Auslösebedingung mit einem graphischen Editor definiert und durch einen Programmgenerator in die ablauffähige Routine (AR) umgesetzt werden.

7. Verfahren nach einem der vorhergehenden Patentansprüche, **dadurch gekennzeichnet,**
**dass** die Routine (AR) getrennt von dem Programm (P) und nach dem Laden oder Installieren des Programms (P) auf die Zielplattform (ZP) übertragbar ist.

8. Verfahren nach einem der vorhergehenden Patentansprüche, **dadurch gekennzeichnet,**
**dass** als der Überprüfungspunkt ein Haltepunkt verwendet wird, wobei an dem Haltepunkt der Ablauf des Programms (P) unterbrochen und die Routine (AR) aufgerufen wird.

9. Verfahren nach einem der vorhergehenden Patentansprüche, **dadurch gekennzeichnet,**
**dass** die Routine (AR) Aufrufe von Funktionen und Methoden einer Firmware (FW) und/oder eines Betriebssystems (BS) der Zielplattform (ZP) umfasst.

10. Verfahren nach einem der vorhergehenden Patentansprüche,
**dadurch gekennzeichnet,**
**dass** das Diagnoseprogramm (DS) als Anwendung in einem Browser der Diagnoseplattform (ES) abläuft, wobei die Zielplattform (ZP) einen Web-Server zur Kommunikation zwischen der Routine (AR) und dem Diagnoseprogramm (DS) aufweist.

11. Debugging-System zur Überwachung eines ablaufenden Programms (P) einer Zielplattform (ZP) durch ein Diagnoseprogramm (DS) einer Diagnoseplattform (ES),
mit einem Diagnoseprogramm (DS) zur Übermittlung eines Überwachungsauftrages mit einer definierten Auslösebedingung zu der Zielplattform (ZP), wobei das Programm (P) mit zumindest einem Überprüfungspunkt versehbar ist, wobei vorgesehen ist, in den Fällen, in denen der Ablauf des zu überwachenden Programms (P) den zumindest einen Überprüfungspunkt erreicht, die Ausführung dieses Programms (P) zu unterbrechen, durch eine Verarbeitungseinheit der Zielplattform (ZP) eine Routine (AR) auszuführen und mittels dieser Routine (AR) die Erfüllung einer Auslösebedingung zu überprüfen, und
wobei zumindest in den Fällen, in denen die Auslösebedingung erfüllt ist, zumindest die Übertragung einer Meldung zu dem Diagnoseprogramm (DS) vorgesehen ist, **dadurch gekennzeichnet,**
**dass** auf der Zielplattform ein für das Diagnoseprogramm zugreifbarer Datenspeicher vorgesehen ist,
**dass** weiter vorgesehen ist, bei einem ersten Erreichen des zumindest einen Überprüfungspunktes zumindest ein Wert einer Variablen oder eine Zustandsinformation des Programms (P) in dem Datenspeicher zu sichern, und dass schließlich vorgesehen ist, bei einem nachfolgenden Erreichen dieses oder eines anderen Überprüfungspunktes zur Feststellung der Erfüllung der Auslösebedingung der Inhalt des Datenspeichers mit einem aktuellen Wert der Variablen oder einer aktuellen Zustandsinformation in Bezug zu setzen.

12. Debugging-System nach Patentanspruch 11,
**dadurch gekennzeichnet,**
**dass** die Zielplattform (ZP) eine speicherprogrammierbare Steuerung einer industriellen Automatisierungsanordnung ist, wobei zumindest ein Teil des Programms zyklisch ausgeführt wird.

13. Debugging-System nach Patentanspruch 12,
**dadurch gekennzeichnet,**
**dass** in dem Datenspeicher eine Mehrzahl von Werten zumindest einer Variablen oder Zustandsinformation aus einer Mehrzahl von Zyklen des Programms (P) speicherbar und zur Feststellung der Erfüllung der Auslösebedingung verwendbar ist.

14. Debugging-System nach einem der Patentansprüche 12 oder 13,
**dadurch gekennzeichnet,**
**dass** die Routine (AR) zur Inbezugsetzung anhand der Werte aus verschiedenen Zyklen mittels einer Trendanalyse oder einer schnellen Fouriertransformation eingerichtet ist.

15. Debugging-System nach einem der vorhergehenden Patentansprüche 11 bis 14,
**dadurch gekennzeichnet,**
**dass** als das Diagnoseprogramm (DS) ein Entwicklungssystem (ES) für speicherprogrammierbare Steuerungen ist.

16. Debugging-System nach einem der vorhergehenden Patentansprüche 11 bis 15,
**dadurch gekennzeichnet,**
**dass** es einen graphischen Editor zur Definition der Parameter und/oder Eigenschaften der Auslösebedingung und einen Programmgenerator zur Umsetzung der derart definierten Auslösebedingung in die ablauffähige Routine (AR) aufweist.

17. Debugging-System nach einem der vorhergehenden Patentansprüche 11 bis 16,
**dadurch gekennzeichnet,**
**dass** die Routine (AR) getrennt von dem Programm (P) und nach dem Laden oder Installieren des Programms (P) auf die Zielplattform (ZP) übertragbar ist.

18. Debugging-System nach einem der vorhergehenden Patentansprüche 11 bis 17,
**dadurch gekennzeichnet,**
**dass** als der Überprüfungspunkt ein Haltepunkt definierbar und in das Programm (P) einsetzbar ist, wobei der Haltepunkt zur Unterbrechung des Ablaufs des Programms (P) und zum Aufruf der Routine (AR) eingerichtet ist.

19. Debugging-System nach einem der vorhergehenden Patentansprüche 11 bis 18,
**dadurch gekennzeichnet,**
**dass** die Routine (AR) Aufrufe von Funktionen und Methoden einer Firmware (FW) und/oder eines Betriebssystems (BS) der Zielplattform (ZP) umfasst.

20. Debugging-System nach einem der vorhergehenden Patentansprüche 11 bis 19,
**dadurch gekennzeichnet,**
**dass** das Diagnoseprogramm (DS) zum Ablauf als eine Anwendung in einem Browser der Diagnoseplattform (ES) vorgesehen ist, wobei die Zielplattform (ZP) einen Web-Server zur Kommunikation zwischen der Routine (AR) und dem Diagnoseprogramm (DS) aufweist.
